# EUROPÄISCHE PATENTSCHRIFT

(11) **EP 1 990 327 B1**
(45) Veröffentlichungstag und Bekanntmachung des Hinweises auf die Patenterteilung: **20.04.2011**
(21) Anmeldenummer: 07009113.7
(22) Anmeldetag: 07.05.2007
(51) Int. Cl.: C04B 35/468, C04B 35/50, C23C 28/00, C23C 30/00

(54) **Keramisches Pulver, keramische Schicht und Schichtsystem mit einer Gadolinium-Mischkristall-Pyrochlorphase und Oxiden**
Ceramic powder, ceramic layer and layer system with a gadolinium pyrochlorphase solid solution and oxides
Poudre céramique, couche céramique et système de couche comportant une solution solide de phase structure pyrochlore à base de gadolinium et des oxydes

(43) Veröffentlichungstag der Anmeldung: 12.11.2008
(60) Teilanmeldung: 10013832.0
(73) Patentinhaber: SIEMENS AKTIENGESELLSCHAFT, 80333 München (DE)
(72) Erfinder: Subramanian, Ramesh, Dr., 10777 Berlin (DE)

(56) Entgegenhaltungen:
- EP-A- 1 806 432
- EP-A- 1 806 435
- US-A1- 2004 106 015
- US-B1- 6 284 323

## Beschreibung

Die Erfindung betrifft ein keramisches Pulver, eine keramische Schicht und ein Schichtsystem mit Pyrochloren und Oxiden.

Ein solches Schichtsystem weist ein Substrat mit einer Metalllegierung auf der Basis von Nickel oder Kobalt auf. Derartige Erzeugnisse dienen vor allem als Bauteil einer Gasturbine, insbesondere als Gasturbinenschaufeln oder Hitzeschilde. Die Bauteile sind einem Heißgasstrom von aggressiven Verbrennungsgasen ausgesetzt. Daher müssen sie hohen thermischen Belastungen Stand halten können. Des Weiteren ist es erforderlich, dass diese Bauteile oxidations- und korrosionsbeständig sind. Vor allem an bewegliche Bauteile, z. B. Gasturbinenschaufeln, aber auch an statische Bauteile sind fernerhin mechanische Anforderungen zu stellen. Die Leistung und der Wirkungsgrad einer Gasturbine, in der heißgasbelastbare Bauteile Verwendung finden, steigen mit zunehmender Betriebstemperatur. Um einen hohen Wirkungsgrad und eine hohe Leistung zu erzielen, werden durch die hohen Temperaturen besonders belastete Komponenten der Gasturbine mit einem keramischen Werkstoff beschichtet. Dieser wirkt als Wärmedämmschicht zwischen dem Heißgasstrom und dem metallischen Substrat.
Vor dem aggressiven Heißgasstrom wird der metallische Grundkörper durch Beschichtungen geschützt. Dabei weisen moderne Bauteile zumeist mehrere Beschichtungen auf, die jeweils spezifische Aufgaben erfüllen. Es liegt somit ein Mehrschichtsystem vor.
Da Leistung und Wirkungsgrad von Gasturbinen mit zunehmender Betriebstemperatur steigen, wurde immer wieder versucht, durch Verbesserung des Beschichtungssystems eine höhere Leistungsfähigkeit von Gasturbinen zu erzielen.

Die EP 0 944 746 B1 offenbart die Verwendung von Pyrochloren als Wärmedämmschicht. Jedoch sind für den Einsatz eines Materials als Wärmedämmschicht nicht nur gute wärmedämmende Eigenschaften notwendig, sondern auch eine gute Anbindung an das Substrat.

Die EP 0 992 603 A1 offenbart ein Wärmedämmschichtsystem aus Gadoliniumoxid und Zirkonoxid, das keine Pyrochlorstruktur aufweisen soll.

Die EP 1 806 432 A1 offenbart ein Schichtsystem mit zwei Pyrochlorphasen, wobei der Anteil der Mischkristalle maximal bei 20 Gew.% liegt.

Es ist daher Aufgabe der Erfindung, ein keramisches Pulver, eine keramische Schicht und ein Schichtsystem aufzuzeigen, das gute wärmedämmende Eigenschaften sowie eine gute Anbindung an das Substrat und damit eine lange Lebensdauer aufweist.

Die Aufgabe wird gelöst durch ein keramisches Pulver, eine keramische Schicht und ein Schichtsystem gemäß Anspruch 1, 19 oder 20.

Der Erfindung liegt die Erkenntnis zugrunde, dass das gesamte System als Einheit betrachtet werden muss und nicht einzelne Schichten oder einzelne Schichten untereinander isoliert von einander betrachtet und optimiert werden dürfen, um eine lange Lebensdauer zu erzielen.

In den Unteransprüchen sind weitere vorteilhafte Maßnahmen aufgeführt, die beliebig in vorteilhafter Art und Weise kombiniert werden können.

Das erfindungsgemäße Schichtsystem besteht aus einer äußeren keramischen Schicht, die ein Mischkristall aus Gadoliniumzirkonat und Gadoliniumhafnat aufweist, das besonders gute thermische Eigenschaften (an das Substrat angepasster Ausdehnungskoeffizient, geringer Wärmeleitkoeffizient) aufweist und sehr gut harmoniert mit einer Zwischenschicht und dem Substrat des Bauteils.

Ausführungsbeispiele der Erfindung werden nachfolgend unter Bezugnahme auf die Zeichnungen noch näher erläutert.

Es zeigen
- Figur 1: ein erfindungsgemäßes Schichtsystem,
- Figur 2: Zusammensetzungen von Superlegierungen,
- Figur 3: eine Gasturbine,
- Figur 4: perspektivisch eine Turbinenschaufel und
- Figur 5: perspektivisch eine Brennkammer.

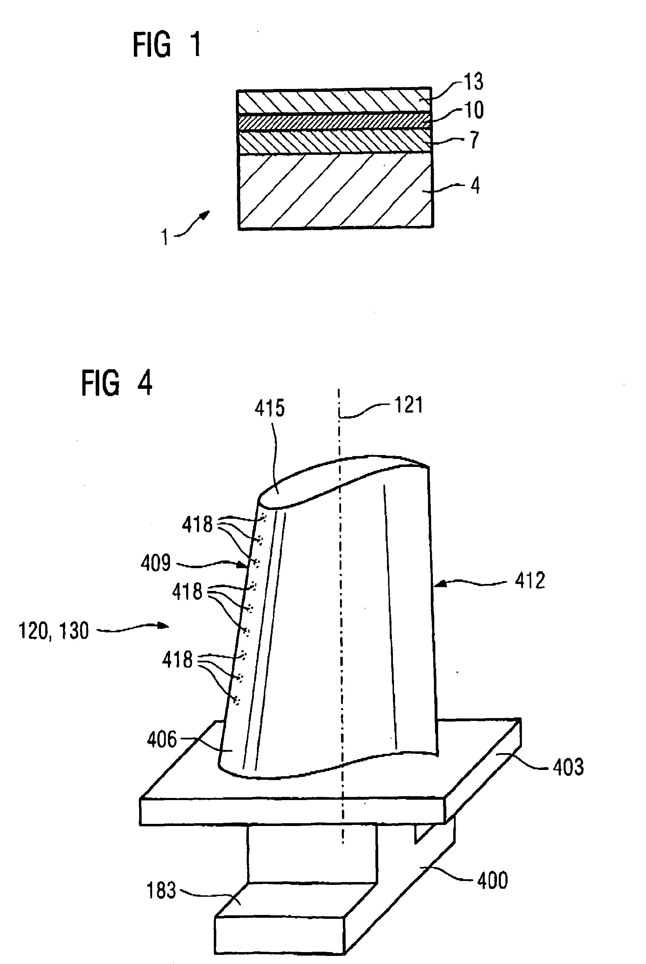

Die Zusammensetzung des keramischen Pulvers wird auch anhand der Zusammensetzung der keramischen Schicht 13 (Fig. 1) beispielhaft erläutert.
Generell können immer Abweichungen von der Stöchiometrie der Pyrochlorstruktur A₂B₂O₇ auftreten.

Eine Pyrochlorstruktur weist die Summenformel Gdᵥ(ZrₓHfy)O_{z} auf, wobei v ≈ 2, x + Y ≈ 2 und z ≈ 7 ist. Abweichungen von dieser stöchiometrischen Zusammensetzung für v, x, y und z können durch Fehlstellen oder geringe, bewusste oder unbewusste Dotierungen entstehen.

Das keramische Pulver weist weiterhin Sekundäroxide von Zirkon und/oder Hafniumoxid auf mit einem Anteil von 0,5wt% bis 10wt%, insbesondere von 1wt% bis 10wt% auf. Das Sekundäroxid wird bewusst zu dem Pulver hinzugefügt, liegt also deutlich über der messtechnischen Nachweisgrenze des Sekundäroxids, also weist mindestens den doppelten Wert der Nachweisgrenze des Sekundäroxids auf.

Der maximale Anteil des Sekundäroxids oder der Sekundäroxide liegt bzw. liegen vorzugsweise bei 8wt%,
insbesondere maximal bei 6wt% und ganz insbesondere zwischen 5wt% und 7wt%.
Dies gilt vorzugsweise für Zirkonoxid.

Der maximale Anteil des Sekundäroxids liegt ebenso vorzugsweise bei 3wt%, insbesondere maximal bei 2wt% und ganz insbesondere zwischen 1,5wt% und 2,5wt%.
Insbesondere gelten die Anteile für Hafniumoxid.

Je nach Anwendungsfall kann das Sekundäroxid nur aus Hafniumoxid bestehen, um bessere Wärmedämmeigenschaften zu erreichen oder das Sekundäroxid wird nur durch Zirkonoxid gebildet, um eine bessere Anpassbarkeit der Ausdehnungskoeffizienten zu den unterliegenden Schichten oder zu dem Substrat zu erreichen.

Eine Kombination der vorteilhaften Eigenschaften von Hafniumoxid und Zirkonoxid lässt sich auch durch die Verwendung beider Sekundäroxide erreichen.

Das keramische Pulver kann vorzugsweise jeweils optional Sinterhilfen bis 0,05wt% Siliziumoxid, bis 0,1wt% Kalziumoxid, bis 1wt% Kalziumoxid, bis 0,1wt% Magnesiumoxid, bis 0,1wt% Eisenoxid, bis 0,1wt% Aluminiumoxid und bis 0,08wt% Titanoxid aufweisen.
Die Sinterhilfen fördern das Zusammenhalten der Schicht nach dem Auftragen und/oder beim Einsatz bei höheren Temperaturen.

Vorzugsweise sind zwei Sekundäroxide vorhanden, insbesondere Hafniumoxid und Zirkonoxid.

Gadoliniumhafnat weist als Pulver 43wt% bis 50wt%, vorzugsweise 44,7wt% bis 47,7wt% Gadoliniumoxid und Rest Hafniumoxid und optional die Sekundäroxide, vorzugsweise Zirkonoxid, und die Sinterhilfen auf. Gadoliniumzirkonat weist als Pulver 56wt% bis 63wt%, vorzugsweise 58wt% bis 61wt% Gadoliniumoxid und Rest Zirkonoxid und optional die Sekundäroxide, vorzugsweise Hafniumoxid, und Sinterhilfen auf. Als Mischkristall werden diese Anteile je nach Verhältnis von Hf und Zr gemischt.

Vorzugsweise umfasst die äußere keramische Schicht 13 Gdᵥ(HfₓZry)O_{z} mit v, x+y ≈ 2, z ≈ 7.
Vorzugsweise umfasst die äußere keramische Schicht 13 auch Gdᵥ(HfₓZr_{y})O₇ mit x+y ≈ 2, v ≈ 2.
Vorzugsweise umfasst die äußere keramische Schicht 13 Gd₂(HfₓZr_{y})O_{z} mit x+y ≈ 2, z ≈ 7.
Vorzugsweise besteht die Pyrochlorstruktur des keramischen Pulvers aus Gd_{V}(Hf_{X}Zr_{Y})O_{Z}, insbesondere mit v ≈ 2, x+y ≈ 2 und z ≈ 7.

Dabei können verschiedene Mischungsverhältnisse y:x von Zirkon und Hafnium verwendet werden.
Vorzugsweise wird ein größerer Anteil von Zirkon verwendet. Ebenso werden vorzugsweise Mischungsverhältnisse von 10:90, 20:80, 30:70 oder 40:60 für Hafnium zu Zirkon verwendet. Weiterhin vorteilhaft ist es, Mischungsverhältnisse von 50:50, 60:40, 70:30, 80:20 oder 90:10 für Hafnium zu Zirkon zu verwenden.
Für die Verhältnisse von x zu y gelten also vorteilhafter Weise genannte Angaben für das Verhältnis von Hafnium zu Zirkon (Hf:Zr = 80:20 entspricht y:x= 1.6:0.4).

Figur 1 zeigt ein erfindungsgemäßes Schichtsystem 1.

Die Zusammensetzung des keramischen Pulvers wird anhand der keramischen Schicht 13 beispielhaft erläutert.

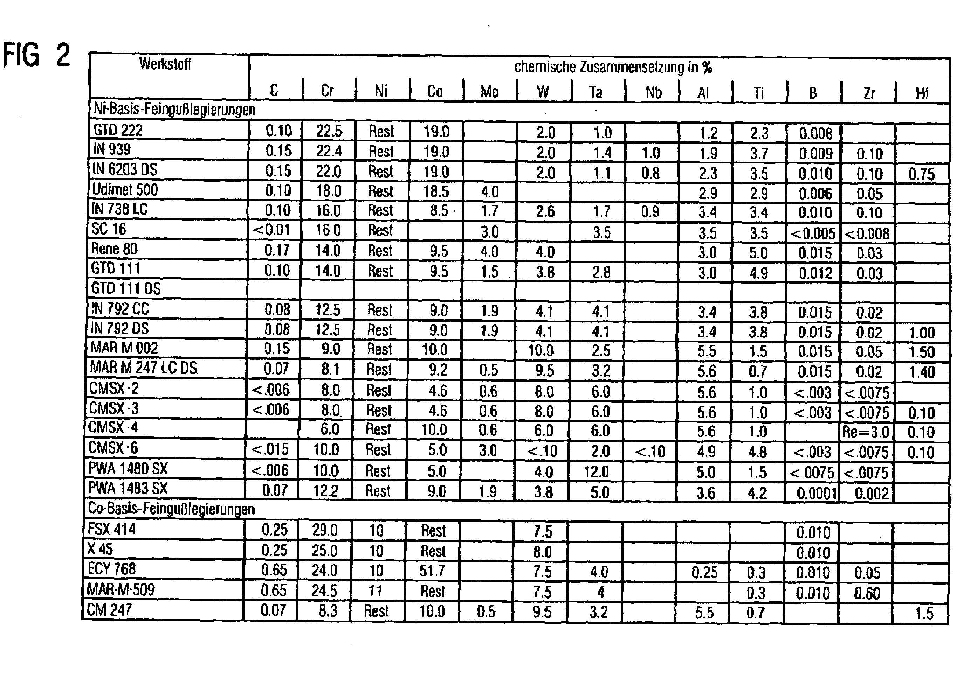

Das Schichtsystem 1 weist ein metallisches Substrat 4 auf, das insbesondere für Bauteile bei hohen Temperaturen aus einer nickel- oder kobaltbasierten Superlegierung (Fig. 2) besteht.

Vorzugsweise direkt auf dem Substrat 4 ist vorzugsweise eine metallische Anbindungsschicht 7 des Typs MCrAlX, insbesondere des Typs NiCoCrAlX vorhanden, die vorzugsweise entweder
(11 - 13)wt% Kobalt, (20 - 22)wt% Chrom, (10,5 - 11,5)wt% Aluminium, (0,3 - 0,5)wt% Yttrium (=X), (1,5 - 2,5)wt% Rhenium und Rest Nickel oder vorzugsweise aus
(24 - 26)wt% Kobalt, (16 - 18)wt% Chrom, (9,5 - 11)wt% Aluminium, (0,3 - 0,5)wt% Yttrium (=X), (1 - 1,8)wt% Rhenium und Rest Nickel aufweist.
Insbesondere besteht die NiCoCrAl Anbindungsschicht 7 aus einer dieser beiden Zusammensetzungen.

Auf dieser metallischen Anbindungsschicht 7 ist vorzugsweise bereits vor dem Aufbringen weiterer keramischer Schichten eine Aluminiumoxidschicht entstanden oder während des Betriebs entsteht eine solche Aluminiumoxidschicht (TGO).
Auf der metallischen Anbindungsschicht 7 oder auf der Aluminiumoxidschicht (nicht dargestellt) ist vorzugsweise eine innere keramische Schicht 10, vorzugsweise eine vollständig oder teilweise stabilisierte Zirkonoxidschicht vorhanden. Vorzugsweise wird Yttrium-stabilisiertes Zirkonoxid, vorzugsweise mit 6wt% - 8wt% Yttrium verwendet. Ebenso kann Kalziumoxid, Ceroxid oder Hafniumoxid zur Stabilisierung von Zirkonoxid verwendet werden.
Das Zirkonoxid wird vorzugsweise als plasmagespritzte Schicht aufgetragen, kann vorzugsweise auch als kolumnare Struktur mittels Elektronenstrahlverdampfen (EBPVD) aufgebracht werden.

Auf der TGO, auf der Anbindungsschicht 7 oder auf der inneren Schicht 10 ist eine äußere keramische Schicht 13 aufgebracht, die erfindungsgemäß ein Mischkristall aus Gadolinium, Hafnium und Zirkon mit Pyrochlorstruktur umfasst, also aus dem oben beschriebenen keramischen Pulver hergestellt ist. Vorzugsweise wird die keramische Schicht 13 ausschließlich aus dem keramischen Pulver hergestellt.
Vorzugsweise stellt die Schicht 13 die äußerste Schicht dar, die dem Heißgas ausgesetzt ist.

Die Sekundäroxide sind in der keramischen Schicht 13 verteilt, insbesondere homogen verteilt.

Die Schicht 13 kann aus einem Pulver hergestellt worden sein, das die Anteile der oben genannten Zusammensetzung ergibt.

Die Schichtdicke der inneren Schicht 10 beträgt vorzugsweise zwischen 10% und 50% der Gesamtschichtdicke D von innerer Schicht 10 und äußerer Schicht 13.
Vorzugsweise liegt die Schichtdicke der inneren Schicht 10 zwischen 10% und 40% oder zwischen 10% und 30% der Gesamtschichtdicke.
Ebenso vorteilhaft ist es, wenn die Schichtdicke der inneren Schicht 10 10% bis 20% der Gesamtschichtdicke aufweist. Ebenso vorzugsweise ist es, wenn die Schichtdicke der inneren Schicht 10 zwischen 20% und 50% oder zwischen 20% und 40% der Gesamtschichtdicke beträgt.
Wenn der Anteil der inneren Schicht 10 an der Gesamtschichtdicke zwischen 20% und 30% liegt, werden ebenso vorteilhafte Ergebnisse erzielt.
Vorzugsweise beträgt die Schichtdicke der inneren Schicht 10 30% bis 50% der Gesamtschichtdicke.
Ebenso vorteilhaft ist es, wenn die Schichtdicke der inneren Schicht 10 30% bis 40% der Gesamtschichtdicke aufweist. Ebenso vorzugsweise ist es, wenn die Schichtdicke der inneren Schicht 10 zwischen 40% und 50% der Gesamtschichtdicke beträgt.
Obwohl die Pyrochlorphase bessere Wärmedämmungseigenschaften aufweist als die ZrO₂-Schicht, kann die ZrO₂-Schicht genauso dick ausgeführt werden wie die Pyrochlorphase.

Für den Kurzzeiteinsatz bei hohen Temperaturen des Schichtsystems kann die äußere Schicht 13 dünner als die innere Schicht 10 ausgeführt sein, also beträgt die Schichtdicke der äußeren Schicht 13 zwischen 10% und 40% der Gesamtschichtdicke aus innerer Schicht 10 und äußerer Schicht 13.

Die innere keramische Schicht 10 hat vorzugsweise eine Dicke von 100µm bis 200µm, insbesondere 150µm ± 10 %.
Die Gesamtschichtdicke von der inneren Schicht 10 und der äußeren Schicht 13 beträgt vorzugsweise 300µm oder vorzugsweise 450 µm. Die maximale Gesamtschichtdicke beträgt vorteilhafterweise 800µm oder vorzugsweise maximal 600µm.

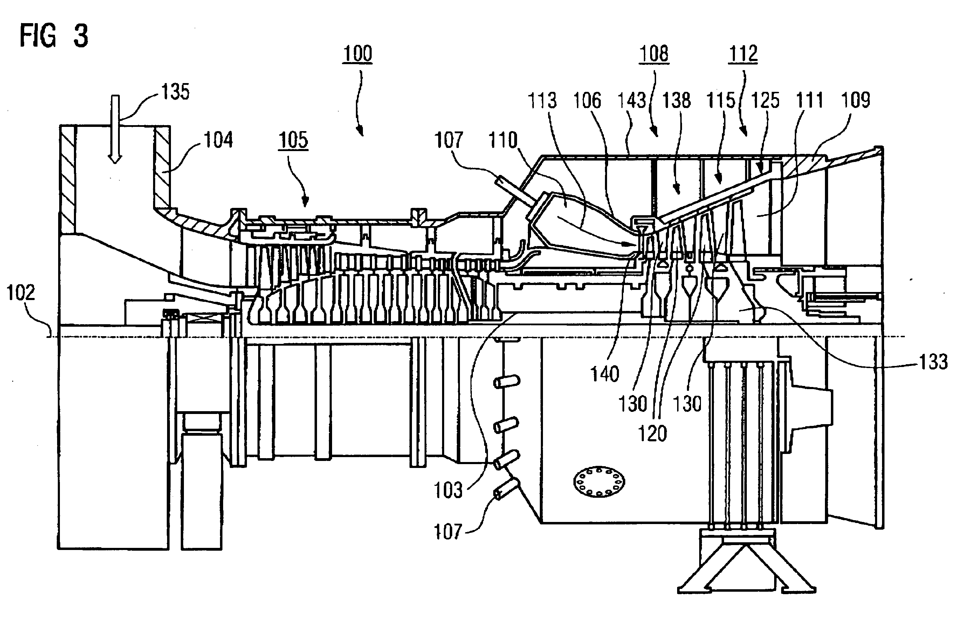

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht aus dem erfindungsgemäßen Schichtsystem 1.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

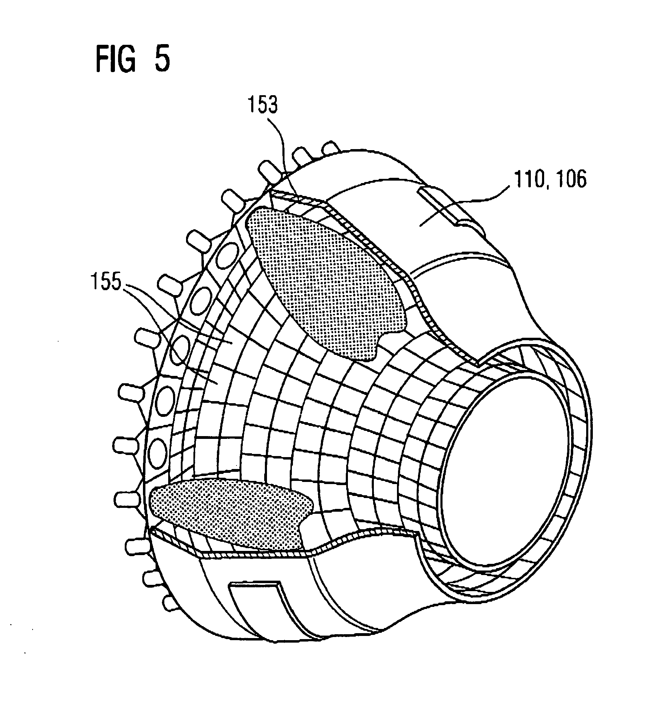

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht und besteht aus dem erfindungsgemäßen Schichtsystem 1.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Keramisches Pulver,
bestehend aus
einer Mischkristall-Pyrochlorstruktur Gdᵥ(ZrₓHf_{y})O_{z},
und Sekundäroxide von Zirkon (Zr) und/oder Hafnium (Hf),
mit einem Anteil von 0,5wt% bis 10wt%
und optional Sinterhilfen aisgeweitet aus
bis 0,05wt% Siliziumoxid
bis 0,1wt% Kalziumoxid
bis 0,1wt% Magnesiumoxid
bis 0,1wt% Eisenoxid
bis 0,1wt% Aluminiumoxid und
bis 0,08wt% Titanoxid.

2. Keramisches Pulver nach Anspruch 1,
das als Sekundäroxid nur Hafniumoxid aufweist.

3. Keramisches Pulver nach Anspruch 1,
das als Sekundäroxid nur Zirkonoxid aufweist.

4. Keramisches Pulver nach Anspruch 1,
das als Sekundäroxide Zirkonoxid und Hafniumoxid aufweist.

5. Keramisches Pulver nach Anspruch 1, 2, 3 oder 4,
bei dem das Sekundäroxid oder die Sekundäroxide nur als Oxid vorliegt oder vorliegen.

6. Keramisches Pulver nach Anspruch 1, 2, 3, 4 oder 5,
das maximal 3wt%,
insbesondere maximal 2wt% und
ganz insbesondere 1,5wt% bis 2,5wt%
eines Sekundär-Oxids,
insbesondere von Hafniumoxid,
aufweist.

7. Keramisches Pulver nach Anspruch 1, 2, 3, 4, 5 oder 6,
das maximal 8wt%,
insbesondere maximal 6wt% und
ganz insbesondere 5wt% bis 7wt%
eines Sekundär-Oxids,
insbesondere von Zirkonoxid,
aufweist.

8. Keramisches Pulver nach Anspruch 1,
bei dem die Pyrochlorphase des keramischen Pulvers Gdᵥ(ZrₓHf_{y})O_{z}, mit v ≈ 2, x+y ≈ 2, z ≈ 7 aufweist, insbesondere daraus besteht.

9. Keramisches Pulver nach Anspruch 1,
bei dem die Pyrochlorphase des keramischen Pulvers Gdᵥ(ZrₓHf_{y})O_{z} mit x+y = 2, v = 2, z = 7 aufweist, insbesondere daraus besteht.

10. Keramisches Pulver nach Anspruch 1,
bei dem die Pyrochlorphase des keramischen Pulvers Gd₂(ZrₓHf_{y})O_{z} mit x+y ≈ 2, z ≈ 7 aufweist, insbesondere daraus besteht.

11. Keramisches Pulver nach Anspruch 1, 8 oder 10,
bei dem die Pyrochlorphase des keramischen Pulvers Gdᵥ(ZrₓHf_{y})O₇ mit v ≈ 2, x+y ≈ 2 aufweist,
insbesondere daraus besteht.

12. Keramisches Pulver nach Anspruch 1, 8, 9, 10 oder 11,
bei dem das Mischungsverhältnis von Hafnium und Zirkon in der Pyrochlorphase zwischen 30:70 und 40:60 beträgt.

13. Keramisches Pulver nach Anspruch 1, 8, 9, 10 oder 11,
bei dem das Mischungsverhältnis von Hafnium und Zirkon in der Pyrochlorphase 50:50 beträgt.

14. Keramisches Pulver nach Anspruch 1, 8, 9, 10 oder 11,
bei dem das Mischungsverhältnis von Hafnium und Zirkon zwischen 60:40 und 70:30 beträgt.

15. Keramisches Pulver nach Anspruch 1, 8, 9, 10 oder 11,
bei dem das Mischungsverhältnis von Hafnium und Zirkon zwischen 10:90 und 20:80 beträgt.

16. Keramisches Pulver nach Anspruch 1, 8, 9, 10 oder 11,
bei dem das Mischungsverhältnis von Hafnium und Zirkon in der Pyrochlorphase zwischen 80:20 und 90:10 beträgt.

17. Keramisches Pulver nach Anspruch 1, 8, 9, 10 oder 11,
bei dem y > x ist.

18. Keramisches Pulver nach Anspruch 1, 8, 9, 10 oder 11,
bei dem y < x ist.

19. Keramische Schicht (13)
hergestellt aus einem Pulver nach einem oder mehreren der vorherigen Ansprüche auf einem Substrat.

20. Schichtsystem mit einem Substrat
aufweisend eine keramische Schicht (13) nach Anspruch 19, die insbesondere die äußerste Schicht darstellt.

21. Schichtsystem nach Anspruch 20,
bei dem unter der äußeren keramischen Schicht (13) eine innere keramische Schicht (10),
insbesondere eine stabilisierte Zirkonoxidschicht,
insbesondere eine Yttrium-stabilisierte Zirkonoxidschicht, vorhanden ist.

22. Schichtsystem nach Anspruch 21,
bei dem die innere keramische Schicht (10) aus einer 6wt% - 8wt% Yttrium-stabilisierten Zirkonoxidschicht besteht.

23. Schichtsystem nach Anspruch 21 oder 22,
bei dem die innere keramische Schicht (10) eine Schichtdicke zwischen 10% und 40%,
insbesondere zwischen 10% und 50% der Gesamtschichtdicke (D) von der inneren keramischen Schicht (10) und der äußeren keramischen Schicht (13) aufweist.

24. Schichtsystem nach Anspruch 21, 22 oder 23,
bei dem die Schichtdicke der inneren keramischen Schicht (10) und der äußeren keramischen Schicht (13) zusammen mindestens 300µm,
insbesondere 300µm beträgt.

25. Schichtsystem nach Anspruch 21, 22 oder 23,
bei dem die Schichtdicke der inneren Schicht (10) und der äußeren Schicht (13) zusammen mindestens 450µm, insbesondere 450µm beträgt.

26. Schichtsystem nach Anspruch 20 oder 21,
bei dem auf dem Substrat (4) und unter der inneren keramischen Schicht (10) oder
unter der äußeren keramischen Schicht (13) eine metallische Anbindungsschicht (7),
insbesondere aus einer NiCoCrAlX-Legierung,
vorhanden ist.

27. Schichtsystem nach Anspruch 26,
bei dem die metallische Anbindungsschicht (7) die Zusammensetzung (in wt%)
11% - 13% Kobalt,
20% - 22% Chrom,
10,5% - 11,5% Aluminium,
0,3% - 0,5% Yttrium,
1,5% - 2,5% Rhenium und
Rest Nickel aufweist,
insbesondere daraus besteht.

28. Schichtsystem nach Anspruch 26,
bei dem die metallische Anbindungsschicht (7) die Zusammensetzung (in wt%)
24% - 26% Kobalt,
16% - 18% Chrom,
9,5% - 11% Aluminium,
0,3% - 0,5% Yttrium,
1% - 1,8% Rhenium und
Rest Nickel aufweist,
insbesondere daraus besteht.

29. Schichtsystem nach Anspruch 21 oder 22,
bei dem die innere Schicht (10) eine Schichtdicke zwischen 50% und 90%,
insbesondere zwischen 60% und 90%
der Gesamtschichtdicke der inneren Schicht (10) und der äußeren Schicht (13) aufweist.

30. Schichtsystem nach Anspruch 21 oder 22,
bei dem die innere Schicht (10) eine Schichtdicke zwischen 70% und 90% der Gesamtschichtdicke der inneren Schicht (10) und der äußeren Schicht (13) aufweist.

31. Schichtsystem nach Anspruch 21 oder 22,
bei dem die innere Schicht (10) eine Schichtdicke zwischen 60% und 80% der Gesamtschichtdicke der inneren Schicht (10) und der äußeren Schicht (13) aufweist.

32. Schichtsystem nach Anspruch 26,
das aus Substrat (4),
metallischer Schicht (7),
innerer keramischer Schicht (10) und
äußerer keramischer Schicht (13) besteht.

33. Schichtsystem nach Anspruch 26, das aus
Substrat (4),
metallischer Schicht (7),
Oxidschicht auf der Schicht (7),
innerer keramischer Schicht (10) und
äußerer Schicht (13) besteht.

## Claims

1. Ceramic powder,
consisting of
a mixed crystal pyrochlore structure Gdᵥ (ZrₓHf_{y}) O_{z},
and secondary oxides of zirconium (Zr) and/or hafnium (Hf),
with a proportion of from 0.5 wt% to 10 wt%
and optionally sintering aids chosen from
up to 0.05 wt% silicon oxide
up to 0.1 wt% calcium oxide
up to 0.1 wt% magnesium oxide
up to 0.1 wt% iron oxide
up to 0.1 wt% aluminum oxide and
up to 0.8 wt% titanium oxide.

2. Ceramic powder according to Claim 1,
which comprises only hafnium oxide as the secondary oxide.

3. Ceramic powder according to Claim 1,
which comprises only zirconium oxide as the secondary oxide.

4. Ceramic powder according to Claim 1
which comprises zirconium oxide and hafnium oxide as secondary oxides.

5. Ceramic powder according to Claim 1, 2, 3 or 4,
wherein the secondary oxide or the secondary oxides is or are only present as the oxide.

6. Ceramic powder according to Claim 1, 2, 3, 4 or 5,
which comprises at most 3 wt%,
in particular at most 2 wt% and
most particularly 1.5 wt% to 2.5 wt%
of a secondary oxide,
in particular of hafnium oxide.

7. Ceramic powder according to Claim 1, 2, 3, 4, 5 or 6,
which comprises at most 8 wt%,
in particular at most 6 wt% and
most particularly 5 wt% to 7 wt%
of a secondary oxide,
in particular of zirconium oxide.

8. Ceramic powder according to Claim 1,
wherein the pyrochlore phase of the ceramic powder comprises Gdᵥ (ZrₓHf_{y}) O_{z}, where v ≈ 2, x+y ≈ 2, z ≈ 7, in particular consists thereof.

9. Ceramic powder according to Claim 1,
wherein the pyrochlore phase of the ceramic powder comprises Gdᵥ (ZrₓHf_{y}) O_{z}, where x+y = 2, v = 2, z = 7, in particular consists thereof.

10. Ceramic powder according to Claim 1,
wherein the pyrochlore phase of the ceramic powder comprises Gd₂ (ZrₓHf_{y}) O_{z}, where x+y ≈ 2, z ≈ 7, in particular consists thereof.

11. Ceramic powder according to Claim 1, 8 or 10,
wherein the pyrochlore phase of the ceramic powder comprises Gdᵥ (ZrₓHf_{y}) O₇, where v ≈ 2, x+y ≈ 2, in particular consists thereof.

12. Ceramic powder according to Claim 1, 8, 9, 10 or 11,
wherein the mixing ratio of hafnium and zirconium in the pyrochlore phase is between 30:70 and 40:60.

13. Ceramic powder according to Claim 1, 8, 9, 10 or 11,
wherein the mixing ratio of hafnium and zirconium in the pyrochlore phase is 50:50.

14. Ceramic powder according to Claim 1, 8, 9, 10 or 11,
wherein the mixing ratio of hafnium and zirconium is between 60:40 and 70:30.

15. Ceramic powder according to Claim 1, 8, 9, 10 or 11,
wherein the mixing ratio of hafnium and zirconium is between 10:90 and 20:80.

16. Ceramic powder according to Claim 1, 8, 9, 10 or 11,
wherein the mixing ratio of hafnium and zirconium in the pyrochlore phase is between 80:20 and 90:10.

17. Ceramic powder according to Claim 1, 8, 9, 10 or 11,
wherein y is > x.

18. Ceramic powder according to Claim 1, 8, 9, 10 or 11,
wherein y is < x.

19. Ceramic layer (13),
produced from a powder according to one or more of the preceding claims on a substrate.

20. Layer system having a substrate,
comprising a ceramic layer (13) according to Claim 19 which in particular represents the outer-most layer.

21. Layer system according to Claim 20,
wherein below the outer ceramic layer (13) there is an inner ceramic layer (10),
in particular a stabilized zirconium oxide layer,
in particular a zirconium oxide layer stabilized with yttrium.

22. Layer system according to Claim 21,
wherein the inner ceramic layer (10) comprises a zirconium oxide layer stabilized with 6 wt% - 8 wt% of yttrium.

23. Layer system according to Claim 21 or 22,
wherein the inner layer (10) has a layer thickness of between 10% and 40%,
in particular between 10% and 50% of the total layer thickness (D) of the inner ceramic layer (10) plus the outer ceramic layer (13).

24. Layer system according to Claim 21, 22 or 23,
wherein the layer thickness of the inner ceramic layer (10) plus the outer ceramic layer (13) are together at least 300 µm,
in particular 300 µm.

25. Layer system according to Claim 21, 22 or 23,
wherein the layer thickness of the inner layer (10) plus the outer ceramic layer (13) are together at least 450 µm, in particular 450 µm.

26. Layer system according to Claim 20 or 21,
wherein on the substrate (4) and below the inner ceramic layer (10) or
under the outer ceramic layer (13) there is a metallic bonding layer (7),
in particular of an NiCoCrAlX alloy.

27. Layer system according to Claim 26,
wherein the metallic bonding layer (7) has the composition (in wt%)
11% - 13% cobalt,
20% - 22% chromium,
10.5% - 11.5% aluminum,
0.3% - 0.5 % yttrium,
1.5% - 2.5% rhenium and
the remainder nickel,
and in particular consists thereof.

28. Layer system according to Claim 26,
wherein the metallic bonding layer (7) has the composition (in wt%)
24% - 26% cobalt,
16% - 18% chromium,
9.5% - 11% aluminum,
0.3% - 0.5 % yttrium,
1% - 1.8% rhenium and
the remainder nickel,
and in particular consists thereof.

29. Layer system according to Claim 21 or 22,
wherein the inner layer (10) has a layer thickness of between 50% and 90%,
in particular between 60% and 90%
of the total layer thickness of the inner layer (10) and the outer layer (13).

30. Layer system according to Claim 21 or 22,
wherein the inner layer (10) has a layer thickness of between 70% and 90% of the total layer thickness of the inner layer (10) and the outer layer (13).

31. Layer system according to Claim 21 or 22,
wherein the inner layer (10) has a layer thickness between 60% and 80% of the total layer thickness of the inner layer (10) and of the outer layer (13).

32. Layer system according to Claim 26,
which consists of a substrate (4),
a metallic layer (7),
an inner ceramic layer (10) and
an outer ceramic layer (13).

33. Layer system according to Claim 26,
which consists of a substrate (4),
a metallic layer (7),
an oxide layer on the layer (7),
an inner ceramic layer (10) and
an outer ceramic layer (13).

## Revendications

1. Poudre de céramique,
constituée
d'une structure pyrochlore à cristal mixte Gdᵥ(ZrₓHf_{y})O_{z},
et d'oxyde secondaire de zirconium ( Zr ) et/ou d'hafnium ( Hf ),
en une proportion de 0,5 % à 10 % en poids
et d'adjuvants de frittage choisis parmi
jusqu'à 0,05 % en poids d'oxyde de silicium
jusqu'à 0,1 % en poids d'oxyde de calcium
jusqu'à 0,1 % en poids d'oxyde de magnésium
jusqu'à 0,1 % en poids d'oxyde de fer
jusqu'à 0,1 % en poids d'oxyde d'aluminium et
jusqu'à 0,08 % en poids d'oxyde de titane.

2. Poudre de céramique suivant la revendication 1,
qui a de l'oxyde d'hafnium comme oxyde secondaire.

3. Poudre de céramique suivant la revendication 1,
qui a de l'oxyde de zirconium comme oxyde secondaire.

4. Poudre de céramique suivant la revendication 1,
qui a de l'oxyde de zirconium et de l'oxyde d'hafnium comme oxydes secondaires.

5. Poudre de céramique suivant la revendication 1, 2, 3 ou 4, dans laquelle l'oxyde secondaire ou les oxydes secondaires n'est présent ou ne sont présents qu'en tant qu'oxyde.

6. Poudre de céramique suivant la revendication 1, 2, 3, 4 ou 5,
qui a
au maximum 3 % en poids,
notamment au maximum 2 % en poids et
d'une manière tout à fait particulière de 1,5 % en poids à 2,5 % en poids,
d'un oxyde secondaire,
notamment d'oxyde d'hafnium.

7. Poudre de céramique suivant la revendication 1, 2, 3, 4, 5, ou 6,
qui a au maximum 8 % en poids,
notamment au maximum 6 % en poids et
d'une manière tout à fait particulière de 5 % en poids à 7 % en poids,
d'un oxyde secondaire,
notamment d'oxyde de zirconium.

8. Poudre de céramique suivant la revendication 1,
dans laquelle la phase pyrochlore de la poudre de céramique a du Gdᵥ (2rₓHf_{y}) O_{z} avec v ≈ 2, x+y ≈ 2, z ≈ 7,
en en étant notamment constituée.

9. Poudre de céramique suivant la revendication 1,
dans laquelle la phase pyrochlore de la poudre de céramique a du Gdᵥ (2rₓHf_{y}) O_{z} avec x+y = 2, v = 2, z = 7,
en en étant notamment constituée.

10. Poudre de céramique suivant la revendication 1,
dans laquelle la phase pyrochlore de la poudre de céramique a du Gdᵥ(ZrₓHf_{y})O_{z} avec x+y ≈ 2, z ≈ 7,
en en étant notamment constituée.

11. Poudre de céramique suivant la revendication 1, 8 ou 10,
dans laquelle la phase pyrochlore de la poudre de céramique a du Gdᵥ(ZrₓHf_{y})O_{z} avec v ≈ 2, x+y ≈ 2,
en en étant notamment constitué.

12. Poudre de céramique suivant la revendication 1, 8, 9, 10 ou 11,
dans laquelle le rapport de mélange de l'hafnium et du zirconium dans la phase pyrochlore est compris entre 30:70 et 40:60.

13. Poudre de céramique suivant la revendication 1, 8, 9, 10 ou 11,
dans laquelle le rapport de mélange de l'hafnium et du zirconium dans la phase pyrochlore est de 50:50.

14. Poudre de céramique suivant la revendication 1, 8, 9, 10 ou 11,
dans laquelle le rapport de mélange de l'hafnium et du zirconium dans la phase pyrochlore est compris entre 60:40 et 70:30.

15. Poudre de céramique suivant la revendication 1, 8, 9, 10 ou 11,
dans laquelle le rapport de mélange de l'hafnium et du zirconium dans la phase pyrochlore est compris entre 10:90 et 20:80.

16. Poudre de céramique suivant la revendication 1, 8, 9, 10 ou 11,
dans laquelle le rapport de mélange de l'hafnium et du zirconium dans la phase pyrochlore est compris entre 80:20 et 90:10.

17. Poudre de céramique suivant la revendication 1, 8, 9, 10 ou 11,
dans laquelle y > x.

18. Poudre de céramique suivant la revendication 1, 8, 9, 10 ou 11,
dans laquelle y < x.

19. Couche ( 13 ) en céramique,
produite en une poudre suivant l'une ou plusieurs des revendications précédentes sur un substrat.

20. Système stratifié
comprenant un substrat et ayant une couche ( 13 ) en céramique suivant la revendication 19, qui constitue notamment la couche la plus extérieure.

21. Système stratifié suivant la revendication 20,
dans lequel il y a sous la couche ( 13 ) extérieure en céramique une couche ( 10 ) intérieure en céramique, notamment une couche stabilisée d'oxyde de zirconium, notamment une couche stabilisée à l'yttrium d'oxyde de zirconium.

22. Système stratifié suivant la revendication 21,
dans lequel la couche ( 10 ) intérieure en céramique est constituée d'une couche d'oxyde de zirconium stabilisée par 6 à 8 % d'yttrium.

23. Système stratifié suivant la revendication 21 ou 22,
dans lequel la couche ( 10 ) intérieure en céramique a une épaisseur représentant entre 10 % et 40 %,
notamment entre 10 % et 50 % de l'épaisseur ( D ) totale de la couche ( 10 ) intérieure en céramique et de la couche ( 13 ) extérieure en céramique.

24. Système stratifié suivant la revendication 21, 22 ou 23,
dans lequel l'épaisseur totale de la couche ( 10 ) intérieure en céramique et de la couche ( 13 ) extérieure en céramique est d'au moins 300 µm,
en étant notamment de 300 µm.

25. Système stratifié suivant la revendication 21, 22 ou 23,
dans lequel l'épaisseur totale de la couche ( 10 ) intérieure en céramique et de la couche ( 13 ) extérieure en céramique est d'au moins 450 µm,
en étant notamment de 450 µm.

26. Système stratifié suivant la revendication 20 ou 21,
dans lequel il y a sur le substrat ( 4 ) et sous la couche ( 10 ) intérieure en céramique ou
sous la couche ( 13 ) extérieure en céramique une couche ( 7 ) métallique de liaison,
notamment en un alliage NiCoCrAlX.

27. Système stratifié suivant la revendication 26,
dans lequel la couche ( 7 ) métallique de liaison a la composition ( en % en poids )
de 11 % à 13 % de cobalt,
de 20 % à 22 % de chrome,
de 10,5 % à 11,5 % d'aluminium,
de 0,3 % à 0,5 % d'yttrium,
de 1,5 % à 2,5 % de rhénium et
le reste étant du nickel,
en en étant notamment constituée.

28. Système stratifié suivant la revendication 26,
dans lequel la couche ( 7 ) métallique de liaison a la composition ( en % en poids )
de 24 % à 26 % de cobalt,
de 16 % à 18 % de chrome,
de 9,5 % à 11 % d'aluminium,
de 0,3 % à 0,5 % d'yttrium,
de 1 % à 1,8 % de rhénium et
le reste étant du nickel,
en en étant notamment constituée.

29. Système stratifié suivant la revendication 21 ou 22,
dans lequel la couche ( 10 ) intérieure représente entre 50 % et 90 %,
notamment entre 60 % et 90 %
de l'épaisseur totale de la couche ( 10 ) intérieure et de la couche ( 13 ) extérieure.

30. Système stratifié suivant la revendication 21 ou 22,
dans lequel la couche ( 10 ) intérieure a une épaisseur représentant entre 70 % et 90 % de l'épaisseur totale de la couche ( 10 ) intérieure et de la couche ( 13 ) extérieure.

31. Système stratifié suivant la revendication 21 ou 22,
dans lequel la couche ( 10 ) intérieure a une épaisseur représentant entre 60 % et 80 % de l'épaisseur totale de la couche ( 10 ) intérieure et de la couche ( 13 ) extérieure.

32. Système stratifié suivant la revendication 26,
qui est constitué
d'un substrat ( 4 ),
d'une couche ( 7 ) métallique,
d'une couche ( 10 ) intérieure en céramique et
d'une couche ( 13 ) extérieure en céramique.

33. Système stratifié suivant la revendication 26,
qui est constitué
d'un substrat ( 4 ),
d'une couche ( 7 ) métallique,
d'une couche d'oxyde sur la couche ( 7 ),
d'une couche ( 10 ) intérieure en céramique et
d'une couche ( 13 ) extérieure.
